# EUROPEAN PATENT APPLICATION

(11) **EP 1 695 819 A2**
(43) Date of publication of application: **30.08.2006**
(21) Application number: 06250948.4
(22) Date of filing: 22.02.2006
(51) Int. Cl.: B32B 27/36

(54) **Method for preparing a coated substrate**

(30) Priority: 28.02.2005 MY 0500813
(71) Applicant: San Miguel Woven Products Sdn. Bhd., 75450 Melaka (MY)
(72) Inventor: Yong, Lawrence Joon Leong, Melaka 75450 (MY)
(74) Representative: Lamb, Martin John Carstairs

(57) **Abstract**

A method for preparing a coated substrate (34) comprising the steps of:
providing a substrate (26); and
extrusion coating a monolithic layer of breathable polymer (28) onto a surface of the substrate (26);
wherein maleic anhydride and acrylic ester are added to the breathable polymer to enhance the melt strength and bond strength of the breathable polymer (28) onto the surface of the substrate (26).

## Description

### TECHNICAL FIELD

The invention relates generally to a method for preparing a coated substrate which is breathable but prevents the transmission of liquids, including biological liquids that are capable of transmitting diseases.

### BACKGROUND

Workers, primarily those in the health care profession involved in the treatment and caring of individuals injured or sick, can be exposed to biological liquids that are capable of transmitting diseases. These diseases, which may be caused by a variety of microorganisms, can pose significant risks to life and health.

Since procedural controls are unable to eliminate all possible exposures, attention is placed on reducing the potential of direct skin contact through the use of protective clothing that resists penetration of biological liquids. Thus, the wearer can be protected from biological liquids, such as bodily liquids, which potentially contain diseases or viruses.

Currently many types of non-woven based material medical gowns and drapes are available. Whilst non-woven based materials provide high breathability so that the wearer may feel comfortable, they do not protect the wearer from biological liquid penetration and thus the transmission of bacteria or virus.

In order to provide protection and maintain breathability, a filler may be added to a barrier film which is then coated onto a substrate. The barrier film is made breathable by stretching the filled barrier film to create microporous passageways as the barrier film breaks away from the filler. The microporous passageways, however, make the barrier film, and consequently, the coated substrate, more susceptible to liquid penetration.

The same technology can also be used for building insulation in cold countries (i.e. countries exposed to little sunlight). Currently, breathable roofing is made from non-woven materials that are porous. However, such materials allow water penetration whereas waterproof but breathable roofing is required to avoid leaking and condensation.

Accordingly, there is a need to provide a coated substrate which retains its breathability and allows the passage therethrough of moisture vapour but prevents the flow therethrough of unwanted liquids, such as biological liquids that are capable of transmitting diseases.

### SUMMARY

The present invention provides a method for preparing a coated substrate comprising the steps of:
providing a substrate; and
extrusion coating a monolithic layer of breathable polymer onto a surface of the substrate.

In a preferred embodiment, the method further includes extruding a monolithic layer of breathable polymer through a T-die to flow down between two rollers where the breathable polymer coats the surface of at least one substrate.

The present invention also provides a coated or laminated substrate formed according to the above method.

The present invention further provides a substrate with a monolithic, extrusion coated layer of a breathable polymer, wherein the breathable polymer also comprises maleic anhydride and acrylic ester.

### BRIEF DESCRIPTION OF THE DRAWINGS

The invention is described further by way of example with reference to the accompanying drawings in which:
Figure 1 is a schematic diagram of an extrusion laminator used to prepare a coated substrate in accordance with an embodiment of the present invention;
Figure 2 is a cross-sectional view of a substrate with a monolithic layer of breathable polymer on a surface of the substrate in accordance with another embodiment of the present invention; and
Figure 3 is a cross-sectional view of a substrate with a monolithic layer of breathable polymer on the upper and lower surfaces of the substrate in accordance with another embodiment of the present invention.

### DETAILED DESCRIPTION

In the subject specification, except where the context requires otherwise due to express language or necessary implication, the words "comprise" or variations such as "comprises" or "comprising" are used in an inclusive sense, i.e. to specify the presence of the stated features but not to preclude the presence or addition of further features in various embodiments of the invention.

It must be noted that, as used in the subject specification, the singular forms "a", "an" and "the" include plural aspects unless the context clearly dictates otherwise. Thus, for example, reference to "a substrate" includes a single substrate, as well as two or more substrates; and so forth.

A coated substrate is prepared by providing a substrate and extrusion coating a monolithic layer of breathable polymer onto a surface of the substrate.

The substrate according to the present invention may be any substrate conventionally used in protective garments and the like, or in the construction industry. Suitable substrates include, but are not necessarily limited to, non-woven substrates such as fabrics, paperboard, chipboard, kraft paper, veneers, wood or cellulose composites, natural or synthetic films, foils, glass fiber mats, woven fabrics, and the like.

The term "non-woven" as used herein refers to a substrate having a structure of individual fibers or threads, that are interlaid, but not in a regular, repetitive manner as in a knitted fabric. Non-woven substrates are particularly preferred in the present invention because non-woven substrates are widely used in protective garments and insulation material due to their soft and flexible nature. A particularly preferred non-woven substrate for the present invention is a polypropylene (PP) non-woven substrate.

The breathable polymer comprises polyether-polyamide block copolymers. It is mixed with maleic anhydride and acrylic ester (ethylene base) to improve its adhesion and melt strength. Polyester based polymer is also able to provide breathability.

The polyether-polyamide block copolymers have the following general structure: 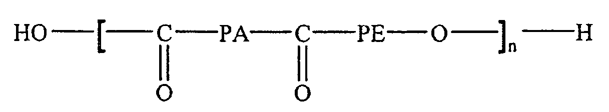 where PA is an aliphatic polyamide "hard" block (Nylon 6 or Nylon 12, for example), and PE is a polyether "soft" block (poly(ethylene oxide) or poly(tetramethylene oxide) for example). The hard blocks provide mechanical strength, and the soft blocks allow moisture vapor transmission.

The term "breathable polymer" is used herein to mean that the layer of breathable polymer is substantially impervious to liquids, but is highly permeable to moisture vapor. As used herein, "liquids" are distinguished from vapors and gases in that liquids have typical easy flowability characteristics with little or no tendency to disperse whereas vapors are in a gaseous state or are suspended in a gaseous state and are readily dispersed. Obviously, vapors may become liquidified with the application of sufficient pressure.

Maleic anhydride and acrylic ester are added to the breathable polymer to enhance the melt strength and bond strength of the breathable polymer, when in molten form, to the substrate being coated. The maleic anhydride provides heat stability whilst the acrylic ester provides polar surface for adhesion.

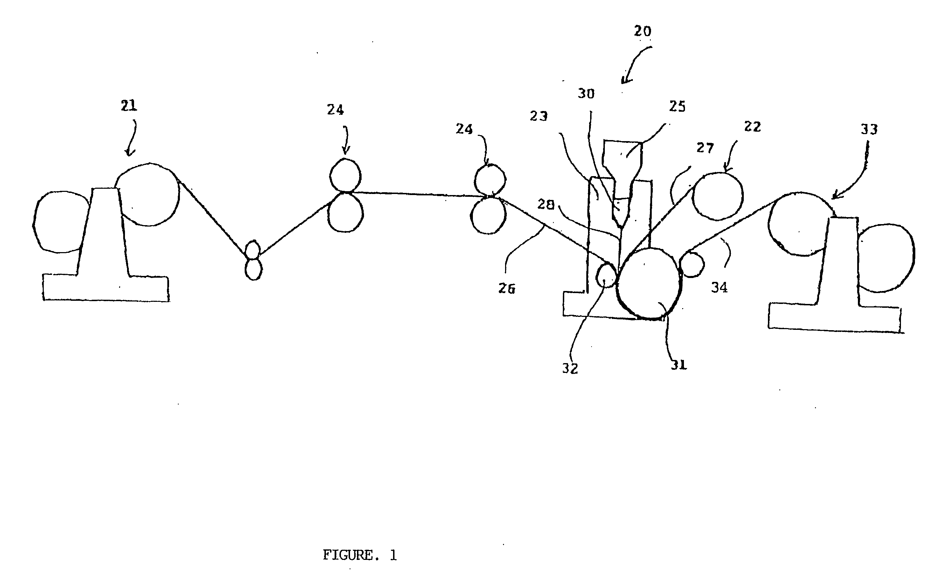

One embodiment of the coated substrate may be prepared utilising equipment such as the extrusion laminator illustrated in Figure 1.

The extrusion laminator as shown in Figure 1 comprises feed rollers 21, 22 which feed substrates 26, 27 from opposite directions to extruder 23 where the substrates 26, 27 are brought together. Substrate 26 is also fed along guide rollers 24. The breathable polymer (28), which exits the T-die 30 in molten form, is laminated and pressed between surfaces of the substrates 26, 27 before the substrate 26, 27 and breathable polymer 28 exit as a single sheet 34.

The substrates 26, 27 may be treated prior to extrusion coating with the breathable polymer 28 to enhance adhesion.

Pre-treatment is usually performed if a substrate is not compatible with the breathable polymer 28, or if a substrate has a low surface energy. A polypropylene (PP) non-woven substrate is an example of a substrate with a low surface energy. A typical pre-treatment used in the art of the invention is "corona treatment". Corona pre-treatment increases the polar surface energy of the polypropylene (PP) non-woven substrate so that a physical bond can be formed when the breathable polymer 28 is coated onto the surface of the polypropylene (PP) non-woven substrate.

The breathable polymer 28, which is supplied in solid pellet form, is poured into a hopper 25 on the extruder 23. The breathable polymer 28 is heated and subjected to pressure to create a molten polymer bonding material 28 which flows down through the T-die 30 to coat the moving substrates 26, 27. The breathable polymer 28, when in molten form, penetrates and anchors into the substrates 26, 27 thereby producing a strong bond between the molten polymer bonding material 28 and the substrates 26, 27. The T-die 30 produces a continuous and elongate film of molten polymer bonding material 28 that spans the width of the substrates 26, 27 to coat the entire surface area of the substrates 26, 27.

Chill roller 31 contains chilled water to cool the coated or laminated substrate 34 at the surface of the roller immediately after the molten breathable polymer 28 is applied between the substrates 26, 27. A silicone roller 32 applies pressure against the chill roller 31 to firmly press the coated or laminated substrate 34 as it is being cooled. The pressure exerted by the chill roller 31 and silicone roller 32 on the coated or laminated substrate 34 helps adhesion between the molten polymer bonding material 28 and substrates 26, 27. The maleic anhydride and acrylic ester, which is included in the composition, further enhances bond strength. The coated or laminated substrate 34 is then wound onto a take-up roller 33.

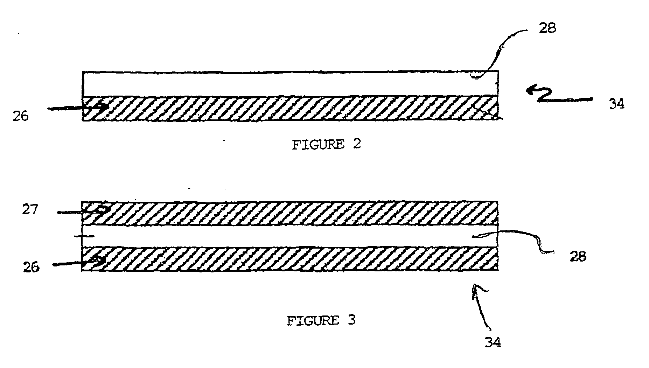

The resulting laminated substrate 34 is illustrated in Figure 3, and comprises a layer of breathable polymer 28 sandwiched between two outer layers of substrate 26, 27.

If it is desired to only coat the surface of a single substrate, a second substrate is not fed from feed roller 22 to the extruder 23. The resulting coated substrate 34 will comprise a layer of breathable polymer 28 coated on a surface of a substrate 26 as illustrated in Figure 2.

The adhesion strength of the breathable polymer 28 coating on the surface of the substrate can be optimized by optimizing certain process factors.

Coating thickness also plays a part in the adhesion strength. The thickness of the monolithic layer of breathable polymer 28 will vary, depending on the end use of the coated substrate 34. A coating weight of 10 gsm or more is therefore preferable to maintain good adhesion. A coating weight of 20 gsm to about 30 gsm is more preferable, and a coating weight of about 20 gsm is most preferable.

The resulting breathable polymer layer 28 is substantially impervious to the transmission therethrough of any liquid such as water, biological liquids or bodily liquids, but has a molecular structure which allows the passage of moisture vapor therethrough.

The monolithic layer of breathable polymer coated on a substrate 26, 27 also exhibits a high moisture vapor transmission rate (MVTR), without perforating and stretching either the breathable polymer layer or the substrate or making micro-pinholes.

The monolithic extrusion coated breathable polymer layer of the coated substrate 34 according to the present invention provides the final product, whether it be a garment, such as sports garments or medical garments, garments used in electronic industries (i.e. to be used in a clean room) or building insulation, with an impervious barrier to liquids.

### EXAMPLES

The present invention will now be described with reference to the following non-limiting Examples.

In the examples, ASTM E96 "Test Method for Water Vapor Transmission of Materials" is the industry test for testing the rate of water vapor transmission through materials, wherein "WVTR" refers to Water Vapor Transmission Rate. The following examples were carried out using this test.

In the examples, "gsm" is a unit of measurement denoting the weight per area of non woven substrate as grams / square meter.

### Example 1

**Composition of breathable polymer:**

| Component | Amount |
|---|---|
| Maleic anhydride | About 1-2% |
| Acrylic ester | About 2% |
| Polyether-polyamide material | About 70% |
| Ethylene | About 26% |

### Procedure:

20gsm breathable polymer was coated onto a surface of 30gsm polypropylene (PP) non-woven substrate using the extrusion laminator process as described above to produce a coated substrate as illustrated in Figure 2.

### Results:

According to ASTM E96, the coated substrate, when tested, had a WVTR value of more than 1000g/m²/day.

The coated substrate also had a hydrostatic head pressure of more than 100cm (AATCC 127). AATCC 127 is a test method to evaluate hydrostatic head pressure.

### Example 2

**Composition of breathable polymer:**

| Component | Amount |
|---|---|
| Maleic anhydride | About 1-2% |
| Acrylic ester | About 2% |
| Polyether-polyamide material | About 70% |
| Ethylene | About 26% |

### Procedure:

20gsm breathable polymer was sandwiched between the surface of a 20gsm polypropylene (PP) non-woven substrate and the surface of a 30gsm polypropylene (PP) non-woven substrate, and pressed therebetween, using the extrusion laminator process as described above to produce a laminated substrate as illustrated in Figure 3.

### Results:

According to ASTM E96, the coated substrate, when tested, had a WVTR value of more than 1000g/m²/day.

The coated substrate also had a hydrostatic head pressure more than 100cm (AATCC 127).

The breathable substrates are impervious to liquid, blood and other fluids, which potentially contain diseases or viruses.

The coated substrates of the examples were also subjected to other standard tests such as ASTM F1670 and ASTM F1671 and ASTM F23 (Draft), and passed all of these tests.

ASTM F1670 - standard test method for resistance of materials used in protective clothing to penetration by synthetic blood.

ASTM F1671 - standard test for resistance of materials to penetration by blood-borne pathogens for use with elastomeric materials.

Accordingly, the coated substrate of the present invention provides a water vapour transmission rate of at least 500 g/m²/day, preferably at least 800 g/m²/day, and more preferably at least 1000 g/m²/day.

Wherein the foregoing description reference has been made to specific component or integers of the invention which known equivalents then such equivalents are herein incorporated as if individually set forth.

Although this invention has been described by example and with reference to possible embodiment thereof, it is to be understood that modifications or improvements may be made thereto without departing from the scope of the invention.

## Claims

1. A method for preparing a coated substrate (34) comprising the steps of:
providing a substrate (26); and
extrusion coating a monolithic layer of breathable polymer (28) onto a surface of the substrate (26) .

2. A method as claimed in claim 1, further comprising the step of adding maleic anhydride and acrylic ester to the breathable polymer to enhance the melt strength and bond strength of the breathable polymer (28) onto the surface of the substrate (26).

3. A method as claimed in claim 1 or claim 2, wherein the substrate (26) is non-woven.

4. A method as claimed in claim 3, including selecting the non-woven substrate from tHe group consisting of fabrics, paperboard, chipboard, kraft paper, veneers, wood or cellulose composites, natural or synthetic films, foils, glass fiber mats, woven fabrics.

5. A method as claimed in claim 4, wherein the non-woven substrate is a polypropylene (PP) non-woven substrate.

6. A method as claimed in any one of the preceding claims, wherein the breathable polymer (28) comprises a polyether-polyamide block copolymer or polyester based polymer.

7. A method as claimed in claim 6, wherein the breathable polymer (28) comprises at least 70% polyether-polyamide/polyester block copolymers.

8. A method as claimed in claim 6 or claim 7, wherein the breathable polymer comprises about 20% to about 30% ethylene.

9. A method as claimed in any one of the preceding claims, including adding about 0.5% to about 3.0% maleic anhydride to the breathable polymer.

10. A method as claimed in any one of the preceding claims, including adding about 1% to about 3% acrylic ester to the breathable polymer.

11. A method as claimed in any one of the preceding claims, wherein the monolithic layer of breathable polymer has no micropores.

12. A method as claimed in any one of the preceding claims, further comprising the step of pre-treating the substrate (26, 27) to enhance adhesion of the breathable polymer onto the surface of the substrate (26, 27).

13. A method as claimed in claim 12, wherein the pre-treating performed is a corona pre-treatment.

14. A method as claimed in any one of the preceding claims, including extrusion coating one surface of the substrate (26) to produce a coated substrate (34).

15. A method as claimed in any one of the preceding claims, including extrusion coating a plurality of surfaces of the substrate (26, 27) to produce a laminated substrate (34).

16. A method as claimed in any one of the preceding claims, wherein the coated substrate (34) has a water vapour transmission rate of at least 500 g/m²/day.

17. A method as claimed in any one of the preceding claims, wherein the coated substrate (34) has a water vapour transmission rate of at least 800 g/m²/day.

18. A method as claimed in any one of the preceding claims, wherein the coated substrate (34) has a water vapour transmission rate of at least 1000 g/m²/day.

19. A method as claimed in any one of the preceding claims, wherein the coated substrate (34) is substantially impervious to transmission therethrough of liquid.

20. A method as claimed in any one of the preceding claims, wherein the liquid is a biological liquid capable of transmitting disease.

21. A method as claimed in any one of the preceding claims, wherein the coated substrate (34) is used for building insulation.

22. A method as claimed in any one of the preceding claims, wherein the coating weight of the monolithic layer of breathable polymer (28) is at least 10 gsm.

23. A method as claimed in any one of the preceding claims, wherein the coating weight of the monolithic layer of breathable polymer (28) is about 10 gsm to about 30 gsm.

24. A method as claimed in any one of the preceding claims, wherein the coating weight of the monolithic layer of breathable polymer (28) is about 20 gsm.

25. A method as claimed in any one of the preceding claims, including extruding a monolithic layer of breathable polymer (28) through a T-die (30) to flow down between two rollers (32, 31) where the breathable polymer (28) coats the surface of at least one substrate (26, 27).

26. A coated or laminated substrate (34) formed according to the method of any one of the preceding claims.

27. A substrate (26, 27) with a monolithic, extrusion coated layer of a breathable polymer (28), wherein the breathable polymer (28) also comprises maleic anhydride and acrylic ester.
